Europäisches Patentamt

**European Patent Office**

**Office européen des brevets**

(11) Numéro de publication: **0 145 626**
**A1**

# DEMANDE DE BREVET EUROPEEN

(21) Numéro de dépôt: **84430044.2**

(22) Date de dépôt: **07.12.84**

(51) Int. Cl.⁴: **F 01 C 9/00,** F 02 B 53/00

(30) Priorité: **13.12.83 FR 8320083**

(43) Date de publication de la demande: **19.06.85**
**Bulletin 85/25**

(84) Etats contractants désignés: **AT BE CH DE GB IT LI LU NL SE**

(71) Demandeur: **Société à Responsabilite Limitée : DATOME, 760, Chemin de Fabre à Gavet, F-83500 La Seyne-s/Mer (FR)**

(72) Inventeur: **Meuret, Paul, Les Bastides Chemin de Fabre à Gavet, F-83500 La Seyne-s/Mer (FR)**

(74) Mandataire: **Moretti, René et al, C/O Cabinet BEAU DE LOMENIE 14, rue Raphael, F-13008 Marseille (FR)**

(54) **Moteur thermique à piston rotatif alternatif et à chambre sphérique.**

(57) Moteur thermique comprenant une chambre sphérique (1a/2a/25a/26a) dans laquelle se déplace un piston (5/29) monté à rotation alternative autour d'un axe passant par le centre de ladite chambre, laquelle est obturée par une culasse dont le moteur comporte en outre des moyens extérieurs (40/54/55/56/57/58) pour transformer la rotation alternative du piston en une rotation continue, caractérisé en ce que le piston adopte la forme générale d'une palette demi-circulaire solidaire d'un arbre de révolution (5a/29a) et s'étendant orthogonalement le long des génératrices de l'arbre, lequel piston est d'un rayon sensiblement inférieur à celui de la chambre sphérique pour se déplacer à proximité de la face interne de celle-ci, l'étanchéité entre le piston (5/29) et la chambre (1a/2a/25a/26a) étant obtenue par au moins un segment (9/31) encastré dans une rainure (5b₂/29b₄) réservée à la périphérie du piston, en ce que la culasse (3/4-27/28) s'étend diamétralement à la chambre et comporte sur au moins un des côtés de l'arbre (5a/29a) et à proximité de celui-ci, un bord (3c/4c/27e/28e) s'étendant parallèlement aux génératrices de l'arbre, l'étanchéité entre l'arbre et la culasse étant obtenue par au moins un segment (11/35) encastré dans une rainure (3c₁/4c₁-27e/28e) réservée sur la longueur dudit bord.

# Moteur thermique à piston rotatif alternatif et à chambre sphérique.

La présente invention a pour objet un moteur thermique à piston rotatif alternatif se déplaçant dans une chambre sphérique.

Le secteur technique de l'invention est celui des moteurs à explosion ou à combustion interne.

On connaît les qualités du moteur classique à piston : étanchéité piston/cylindre, chemisage possible et usinage aisé, culasse rapportée sur un joint plat, chambre de combustion favorable etc. ...

Les inconvénients d'un tel moteur relèvent surtout de l'encombrement et du poids dus au nombre nécessaire de cylindres, au vilebrequin et à l'embiellage ...

On connaît également le moteur à piston rotatif.

Toutefois, la rotation continue recherchée s'accompagne de plusieurs inconvénients : étanchéité difficile, faible taux de compression et donc faible rendement, chambres de combustion plates etc.

L'objectif de la présente invention est un moteur thermique à explosion ou à combustion interne hautement performant et de conception allégée fonctionnant selon un cycle à deux temps ou à quatre temps.

Cet objectif est atteint par le moteur thermique selon l'invention comprenant au moins une chambre dans laquelle se déplace un piston, laquelle chambre est obturée par une culasse, caractérisé en ce que le piston est monté à rotation alternative autour d'un axe passant par le centre d'une chambre sphérique, lequel piston adopte la forme générale d'une palette demi-circulaire solidaire d'un arbre de révolution et s'étendant orthogonalement le long des génératrices de l'arbre, lequel piston est d'un rayon sensiblement inférieur à celui de la chambre sphérique pour se déplacer à proximité de la face interne de celle-ci, l'étanchéité entre le piston et la chambre étant obtenue par au moins un segment encastré dans une rainure réservée à la périphérie du piston, en ce que la culasse s'étend diamétralement à la chambre et comporte, sur au moins un des côtés de l'arbre et à proximité de celui-ci, un bord s'étendant parallèlement aux génératrices de l'arbre, l'étanchéité entre l'arbre et la culasse étant obtenue par au moins un segment encastré dans une rainure réservée sur la longueur dudit bord et en ce que le moteur comporte en outre des moyens extérieurs pour transformer la rotation alternative du piston en une rotation continue.

Le résultat de l'invention est un moteur thermique à explosions ou combustion interne comportant au moins une chambre sphérique dans laquelle se déplace un piston rotatif à mouvements alternés.

Un tel moteur est d'un faible encombrement pour un nombre important de chambres et bénéficie ainsi d'une puissance massique élevée comparée aux moteurs à piston classiques. Du fait du fonctionnement à double effet du piston et également qu'une sphère offre un grand volume pour une surface de parois minimale, le moteur permet d'obtenir un volume balayé par le piston (ou cylindrée équivalente) notablement supérieur au volume de la sphère. Dans un moteur de ce type conçu pour fonctionner selon le cycle dit à deux temps, il résulte que se produit une explosion par chambre et par va et vient du (ou des) piston(s), soit quatre explosions par va et vient pour un moteur à piston double et donc une puissance accrue.

Un autre avantage d'un tel moteur est l'accessibilité aux organes qui le constituent. Sa conception avec une ou plusieurs chambres en onglet sphérique permet de disposer de beaucoup de surface pour les lumières de distribution et d'échappement pour le moteur à deux temps, avec des pistons ayant un périmètre plus exploitable étant donné le grand rayon des segments.

Ceci permet également une plus grande surface d'échange avec le fluide de refroidissement. On notera également que selon la conception du piston, celui-ci peut être refroidi par une circulation de fluide de refroidissement à l'intérieur de l'arbre.

De la conception sphérique du moteur découle une grande résistance aux pressions internes et une condition idéale en vue de sa dilatation.

Le fonctionnement à double effet du piston permet le transfert direct de l'effort de la pression d'un côté à l'autre du piston : ainsi une compression d'un côté du piston est soustraite directement d'une détente, de l'autre côté il en est de même si la soustraction doit s'opérer entre les deux pistons. De cette manière, l'embiellage et l'arbre de prise de mouvement rotatif ne sont pas sollicités par ces efforts qu'ils ne doivent pas transmettre. La conception du moteur à piston double est également favorable au niveau des couples qui, pour le cas décrit d'un moteur à deux temps, sont exactement réalisés.

Un autre avantage du moteur selon l'invention est qu'il permet un agencement modulaire.

Le moteur selon l'invention diffère d'un moteur classique par la séparation qui existe entre le moteur proprement dit qui, en l'occurence est sphérique, à l'intérieur duquel se produisent les transformations thermodynamiques et les mécanismes de conversion de la rotation alternative en rotation continue. Cette séparation, qui se situe au niveau de la sortie de l'arbre du piston, autorise des adaptations spécifiques variées aux machines réceptrices entraînées. On peut, par exemple, actionner directement, par l'arbre de prise de mouvement rotatif, une hélice d'avion ou de bateau et tirer parti de son inertie tout en économisant du poids.

Du fait de la conception dudit moteur, il est possible de réaliser des moteurs modulaires en les associant en ligne ou en étoile ou encore en les répartissant sur plusieurs roues motrices etc.

Cette conception modulaire permet des interventions facilitées pour le remplacement d'organes défaillants ou encore la mise hors service d'un moteur dans un ensemble de plusieurs moteurs.

Le moteur selon l'invention présente de sérieux avantages notamment par la séparation du processus thermique et des organes de transformation des mouvements mécaniques, lesquels sont imbriqués dans les moteurs à piston classiques.

D'autres avantages et les caractéristiques de l'invention ressortiront encore à la lecture de la description suivante de divers modes d'exécution d'un moteur thermique à chambres sphériques en référence au dessin sur lequel :

- la figure 1 est une vue en coupe transversale d'un moteur selon l'invention conçu pour fonctionner selon un cycle à quatre temps;

- la figure 2 est une vue en coupe suivant II II du moteur de la figure 1, dont l'arbre à cames et les soupapes sont ramenées dans la coupe;

- la figure 3 est une vue en coupe transversale d'un moteur selon l'invention conçu pour fonctionner selon un cycle à deux temps;

- la figure 4 est une vue extérieure en élévation du moteur selon la figure 3;

- la figure 5 est une vue extérieure suivant la flèche F de la figure 4 illustrant plus particulièrement l'embiellage qui est commun à celui qui équipe le moteur de la figure 1;

- la figure 6 est une vue de face d'un autre mode d'exécution de l'embiellage qui équipe le moteur selon l'invention;

- les figures 7 à 10 illustrent schématiquement le fonctionnement du moteur selon l'invention dans le cycle à deux temps;

- les figures 11 à 14 illustrent, de façon schématique, le
fonctionnement dudit moteur dans le cycle à quatre temps.

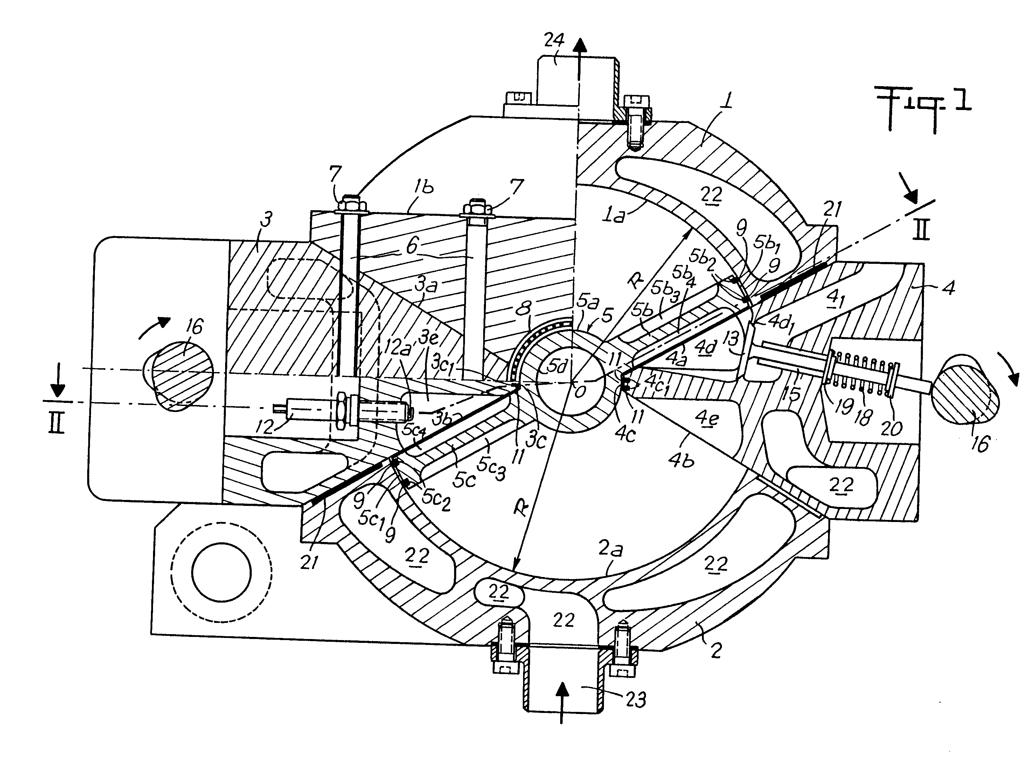

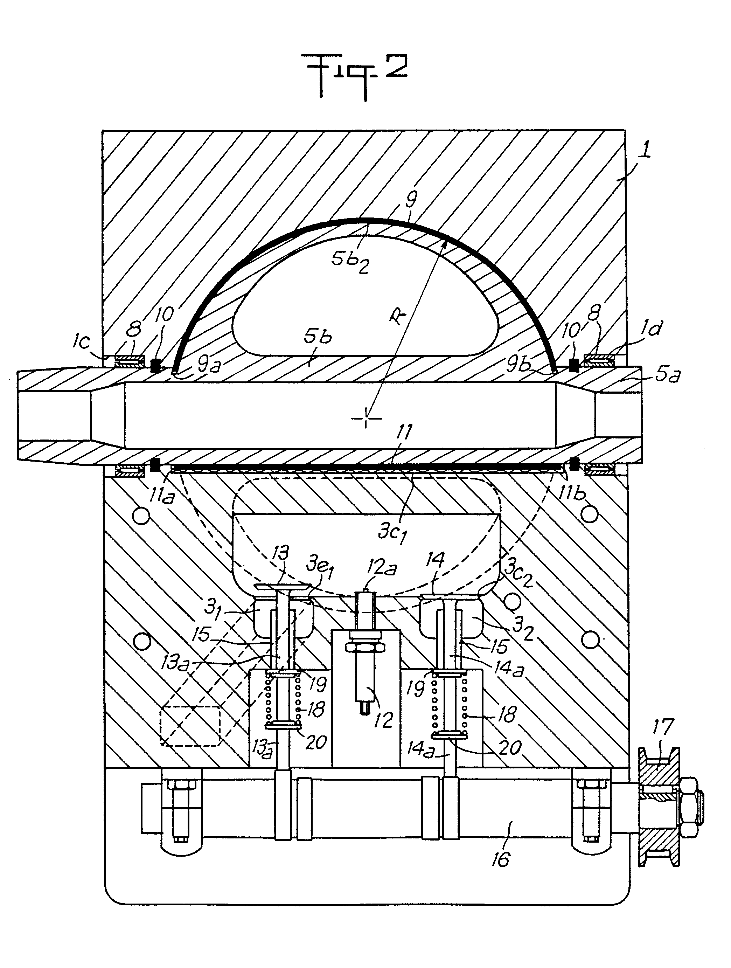

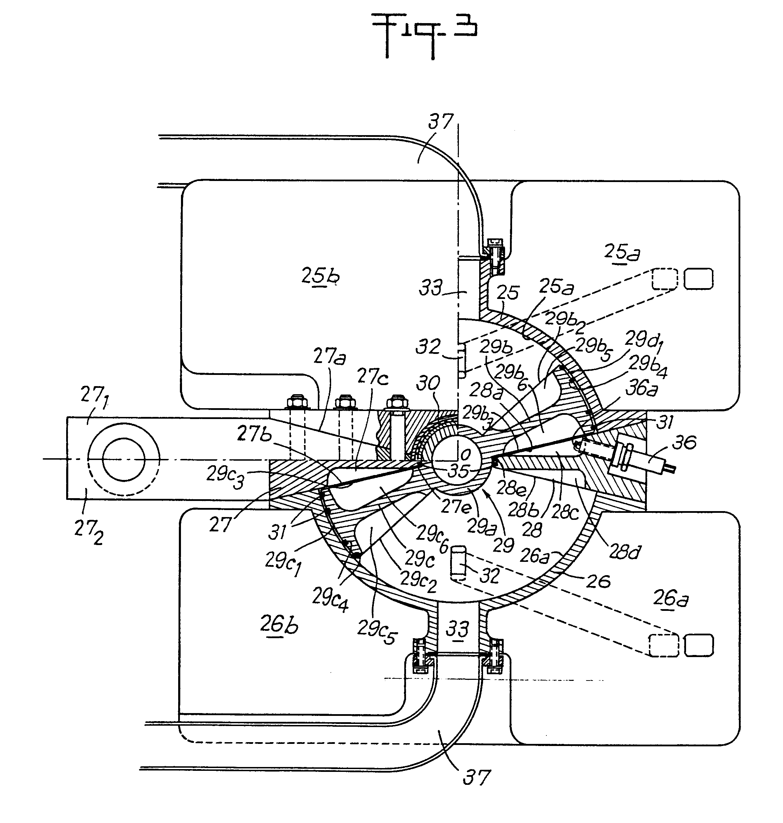

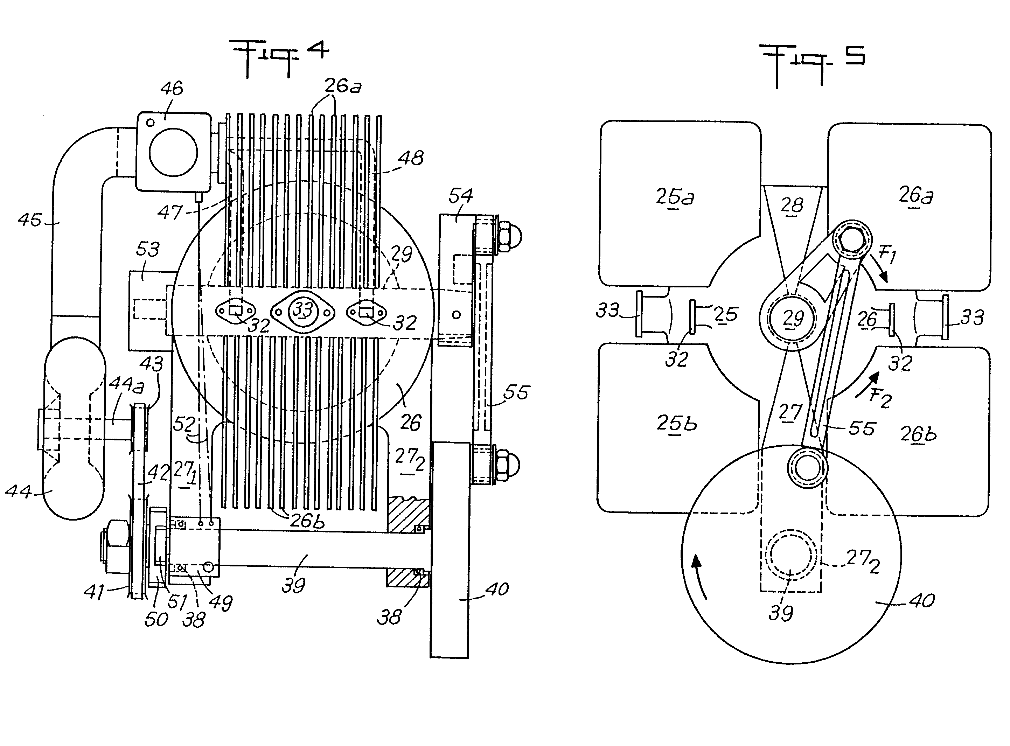

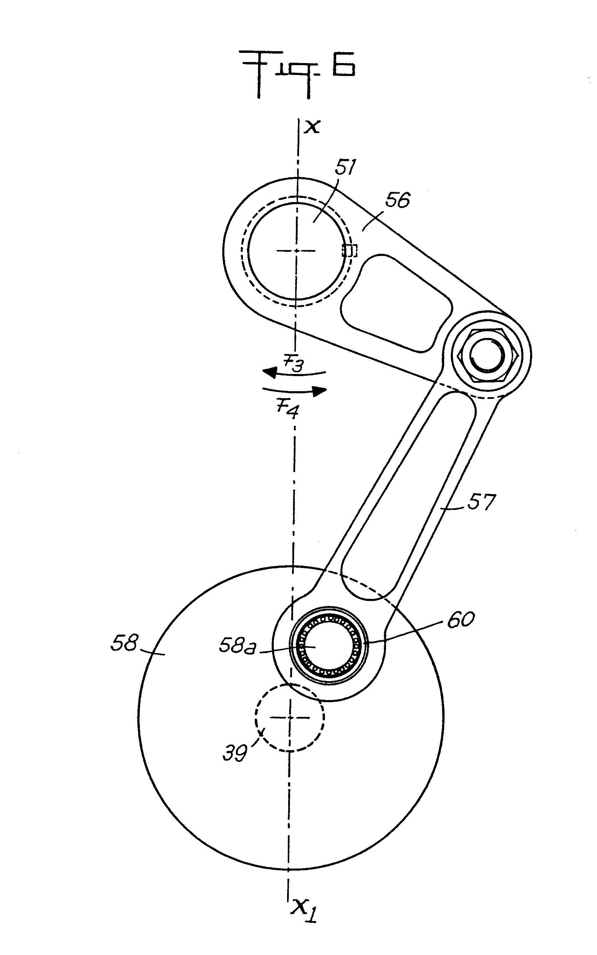

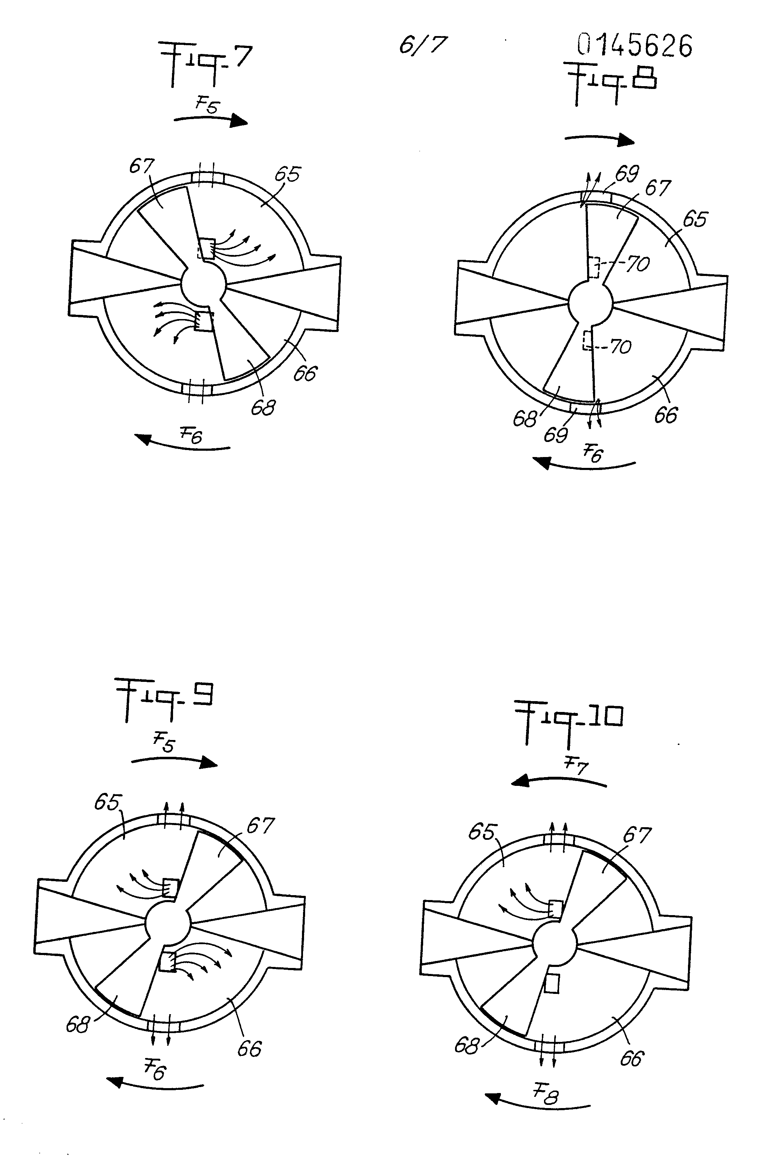

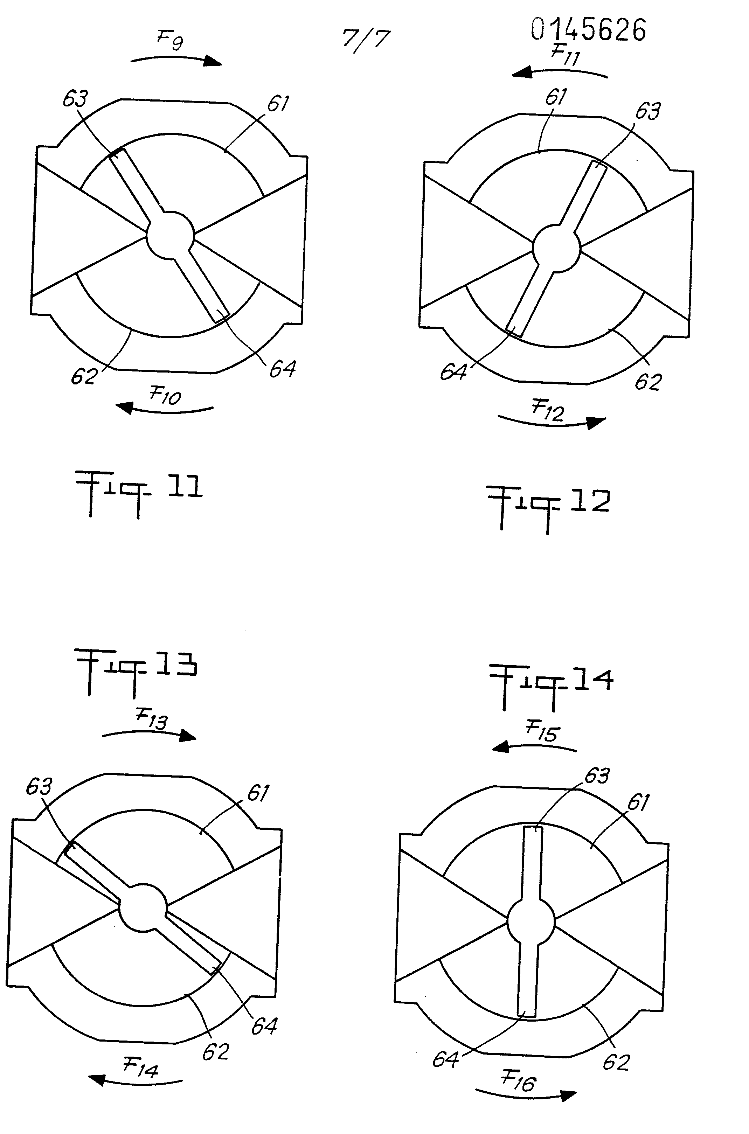

On se reporte d'abord aux figures 1 et 2 du dessin qui illustrent dans un mode de réalisation un moteur selon l'invention réalisé
pour fonctionner selon un cycle à quatre temps.

Celui-ci se compose de deux demi-carters 1/2 adoptant la forme de deux onglets sphériques, lesquels sont fixés de façon étanche
de part et d'autre de deux blocs culasse  3/4 d'une section droite
triangulaire isocèle, dont les faces 3a/3b-4a/4b sur lesquelles s'appliquent les demi-carters 1/2,convergent deux à deux sur une ligne située
du côté du centre O d'une enceinte sphérique. Chacun des demi-carters
1/2 comporte une chambre sphérique 1a/2a de rayon R, lesquelles composent ladite enceinte sphérique et sont délimitées par la face interne
sphérique des carters et par les faces planes 3a/3b-4a/4b des deux
blocs culasse 3/4.

Dans ladite enceinte est monté,à rotation alternative, un rotor ou piston double 5, autour d'un axe transversal passant par le centre O de la sphère. Le rotor 5 se compose d'un arbre cylindrique 5a et
de deux pistons 5b/5c solidaires dudit arbre et s'étendant dans des directions diamétralement opposées, de telle sorte que le piston 5b se
déplace dans la chambre sphérique 1a et que le piston 5c se déplace
dans la chambre sphérique 2a.

Les deux pistons 5b/5c adoptent la forme d'une palette demi-
circulaire de telle sorte que leur bord périphérique $5b_1/5c_1$ se trouve à proximité de la face interne des chambres 1a/2a. Ainsi et selon
l'exemple illustré à la figure 1, les pistons 5b/5c adoptent la forme
d'un segment sphérique.

Les demi-carters 1/2 et les blocs culasse 3/4 sont assemblés
ensemble au moyen de plusieurs broches à visser 6, situées de chaque
côté des paliers du piston 5 et dont les écrous de fixation 7 sont
serrés sur une sorte de bride 1b/2b réservée à la périphérie de chaque
demi-carter 1/2.

Le piston double 5 est monté à rotation alternative autour de
deux paliers équipés de roulements à aiguilles 8 montées de façon connue par emmanchement forcé autour de l'arbre 5a et dans des logements
cylindriques 1c/1d coaxiaux audit arbre et aménagés de part et d'autre desdites chambres sphériques dans l'épaisseur des demi-carters.

Le bord $5b_1/5c_1$ des pistons 5b/5c comporte deux rainures parallèles $5b_2/5c_2$ dans chacune desquelles est disposé un segment d'étanchéité 9. Chaque segment 9 s'étend ainsi sur la périphérie des pistons et dans le but de parfaire l'étanchéité entre le piston et la chambre sphérique dans laquelle il se déplace, les segments se prolongent à leurs extrémités 9a/9b (figure 2) dans l'épaisseur de l'arbre 5a, les rainures $5b_2 5c_2$ s'étendant en partie dans l'épaisseur dudit arbre sur environ trois millimètres. L'étanchéité au droit des alésages à travers lesquels sont passées les extrémités de l'arbre 5a est réalisée par des joints annulaires 10 intercalés entre les chambres sphériques 1a/2a et les roulements à aiguilles 8.

Tel que cela est illustré à la figure 1, le piston 5b se déplace en balayant la chambre 1a de la face 3a de la culasse 3 à la face 4a de la culasse 4, le piston 5c·se déplace dans la chambre 2a, de la face 3b de la culasse 3 à la face 4b de la culasse 4. En fin de course, les pistons sont parallèles et à proximité desdites faces. Le bord 3c/4c de chaque culasse, à partir duquel divergent lesdites faces planes se trouve à proximité de l'arbre 5 du piston double et s'étend d'une paroi à l'autre de l'enceinte sphérique parallèlement audit arbre. Il comporte dans un mode d'exécution deux rainures rectilignes $3c_1/4c_1$ dans lesquelles sont disposés des segments d'étanchéité 11. De façon connue les segments 9/11 sont poussés du côté opposé au fond de leur rainure au moyen d'un ressort ondulé.

De façon à parfaire l'étanchéité entre la culasse 3/4 et l'arbre 5, les segments 11 se prolongent à leur extrémité 11a/11b au-delà de la face interne des chambres sphériques 1a/1b par exemple sur une longueur de trois millimètres.

Chaque culasse 3/4 comporte des cavités 3d/4d-3e/4e qui débouchent sur les faces planes 3a/4a-3b/4b et dans lesquelles sont situés les moyens d'allumage ou d'injection du mélange air/carburant. Suivant l'exemple illustré, chaque culasse 3/4 comporte deux bougies d'allumage 12 vissées dans un orifice taraudé réservé dans la paroi de la culasse et dont les électrodes 12a émergent dans une cavité. Une bougie 12 s'étend dans la cavité 3e et dans la cavité 3d (non représentée) de la culasse 3, une autre bougie (non représentée) s'étend dans la cavité 4d et dans la cavité 4e de la culasse 4. Lesdites cavités 3d/3e-4d/4e comportent également de part et d'autre de chaque bougie 12, des orifices circulaires d'admission des gaz frais $3d_1-3e_1/4d_1-4e_1$ et d'échappement $3d_2-3e_2/4d_2-4e_2$ des gaz brûlés qui communiquent avec les conduits correspondants $3_1/3_2-4_1/4_2$. De façon connue, les orifices $3d_1/3e_1-4d_1/4e_1-3d_2/3e_2-4d_2/4e_2$ sont délimités par une paroi tronconique évasée du côté desdites cavités pour constituer des sièges aux soupapes d'admission 13 et d'échappement 14 dont la tige 13a/14a est montée coulissante dans une douille 15 fixée par exemple par emmanchement forcé dans l'épaisseur de la culasse et est mise en regard d'une came d'un arbre à came 16, monté à rotation à l'extérieur de la culasse au moyen par exemple d'une courroie crantée coopérant avec une poulie 17 ou tout autre moyen de distribution connu. Les soupapes 13 sont maintenues appliquées contre lesdits sièges par des ressorts de compression 18 insérés entre des coupelles 19/20 dont une 20 est rendue solidaire de la tige 13a/14a.

L'étanchéité entre les carters 1/2 et les blocs culasse 3/4 est réalisée par des joints 21 et le contact métal sur métal entr'eux.

Chaque piston 5b/5c comporte au droit de chacune de ses grandes faces, des cavités $5b_3/5b_4-5c_3/5c_4$ qui, lorsque le piston est en fin de course correspondent avec les cavités 3d/3e-4d/4e des blocs culasse 3/4 pour former ensemble les chambres de combustion.

Les demi-carters 1/2 et les blocs culasse 3/4 comportent un réseau de conduits et de chambres 22 formant des doubles parois et dans lesquels est mis en circulation un liquide de refroidissement. Ce liquide est admis en 23 dans l'épaisseur du demi-carter 2 et sort du demi-carter 1 en 24 et est mis en circulation au moyen d'une pompe, et de durites à travers un radiateur (non représenté).

L'arbre 5a du double piston 5 est creux en 5d ce qui permet de supprimer du poids et également d'obtenir le refroidissement de l'arbre en faisant circuler, à l'intérieur, un fluide de refroidissement.

La lubrification du moteur est réalisée par injection d'huile dans le mélange air/carburant admis dans les chambres. L'ordre d'allumage est par exemple 1, 2, 3, 4 en considérant les parties de chambres situées de part et d'autre des pistons et numérotées de 1 à 4 dans le sens des aiguilles d'une montre. On notera ici que l'allumage pourrait être d'un ordre différent et correspondre par exemple à celui d'un moteur à six, huit ou douze cylindres dans la mesure où le moteur sphérique serait doté du nombre de chambres et de pistons rotatifs alternatifs correspondants.

La lubrification de la distribution est réalisée par exemple par une pompe à faible pression, située en bout d'arbre et une rampe d'arrosage pour chaque culasse. Les arbres à cames sont entraînés au moyen d'une courroie crantée coopérant avec des poulies dont l'une est calée sur l'arbre de sortie de prise de mouvement rotatif dont il sera question plus loin.

L'alimentation en gaz air/carburant est réalisée au moyen d'un ou plusieurs carburateurs classiques.

On se reporte maintenant à la figure 3 du dessin qui est une coupe transversale d'un moteur selon l'invention conçu pour fonctionner suivant le cycle à deux temps. Dans sa conception générale ce moteur est très semblable à celui qui vient d'être décrit en référence aux figures 1 et 2. Il comporte deux demi-carters 25/26 dans chacun desquels est réservée une chambre 25a/26a qui adopte la forme d'un onglet sphérique. Ces deux carters sont assemblés en opposition comme sur le moteur de la figure 1, sur deux blocs culasses 27/28, d'une section droite triangulaire isocèle dont les parois planes 27a/28a-27b/28b convergent deux à deux sur une ligne située du côté du centre de l'enceinte sphérique formée par lesdits carters. Du fait que ce type de moteur ne comporte pas de soupapes, les blocs culasse 27/28 sont de moindre importance, corrélativement les chambres sphériques 25a/26a sont d'un plus grand volume. A l'intérieur des deux demi-carters 25/26, assemblés autour des deux blocs culasse 27/28 est monté à rotation alternative un rotor ou double piston 29, lequel se compose, comme celui 5 de la figure 1 d'un arbre 29a et de deux pistons diamétralement opposés 29b/29c. Ce rotor est monté autour de deux paliers 30 en tous points identiques aux paliers 8 du moteur à quatre temps et les pistons adoptent la forme de palettes demi-circulaires dont le bord $29b_1$/ $29c_1$ se déplace devant et à proximité de la face interne des chambres 25a/26a.

Selon une particularité de ce moteur, les pistons 29b/29c adoptent la forme d'onglets sphériques dont les faces planes $29b_2$/ $29c_2$-$29b_3$/$29c_3$ divergent deux à deux à partir de l'abre 29a suivant un angle par exemple de l'ordre de 30°. Comme sur le rotor précédent 5, le bord périphérique de chaque piston comporte des saignées $29b_4$/$29c_4$ dans lesquelles sont montés des segments 31, lesquels sont identiques à ceux du moteur à quatre temps, mais sont au nombre de quatre semgents

par piston. La forme particulière des pistons 29b/29c a été déterminée pour permettre au moteur de réaliser le cycle à deux temps : découvrir selon un ordre de fonctionnement des lumières d'admission des gaz frais 32 et des orifices d'échappement des gaz brûlés 33. Dans un moteur selon l'invention comportant deux pistons 29b/29c, disposés en opposition, les lumières 32 et les orifices 33 sont situés dans un plan diamétral passant par l'axe·du piston double 29. Sur l'exemple illustré à la figure 3, ce plan se confond avec le plan de symétrie des culasses 27/28 et les lumières d'admission 32 sont au nombre de deux par chambre et sont disposées de façon symétrique par rapport à un axe diamétral perpendiculaire à l'axe de rotation du rotor 29 et passant par le centre de la chambre sphérique. Les orifices 33 sont coaxiaux audit axe diamétral. Les lumières 32 sont d'un contour d'une forme allongée et s'étendent dans le sens dudit axe diamétral, par exemple et tel que représenté sur le dessin, les lumières ·32 sont d'une forme rectangulaire et la section d'une lumière est approximativement égale à la demi-section d'un orifice d'échappement. .

Les blocs culasse 27/28 comportent des cavités 27c/28c/27d/28d semblables aux cavités des blocs 3/4 du moteur à quatre temps mais de moindre importance. Ces cavités 27c/28c-27d/28d correspondent avec des cavités $29b_5/29b_6 - 29c_5/29c_6$ réservées dans le piston 29 et semblables aux cavités du double piston 5.

Comme sur le moteur précédemment décrit, les culasses 27/28 ont leur bord 27e/28e situé à proximité de l'arbre 29a du rotor 29, l'étanchéité réalisée de la même façon au moyen de deux segments 35 mis au contact dudit arbre 29a. Comme l'exemple précédent, chaque culasse 27/28 comporte deux bougies d'allumages 36 vissées dans un orifice taraudé réservé dans la paroi de la culasse et dont les électrodes 36a ·sont dans les cavités 27c/27d/28c/28d.

Le refroidissement du moteur est obtenu par des ailettes 25a/25b-26a/26b s'étendant parallèlement au plan diamétral de symétrie perpendiculaire à l'axe de rotation du piston 29. Ces ailettes sont d'un contour d'une forme générale rectangulaire et sont rassemblées en quatre groupes symétriques deux à deux par rapport au plan dans lequel sont situés les axes des orifices d'échappement des gaz brûlés 33 et au plan dans lequel sont situées les culasses. Cette disposition permet l'accès aux bougies 36 et aux tubulures d'échappement 37 qui sont reliées auxdits orifices 33.

L'étanchéité entre les carters 25/26 et les blocs culasse 27/28 est par exemple et tel que représenté sur le dessin, réalisée métal sur métal.

Du fait de la forme en onglet sphérique des pistons 29b/29c et de leur encombrement, la course réservée à la compression et la détente se trouve augmentée par rapport à la course réservée au transfert : admission/ échappement.

A l'inverse d'un moteur classique à deux temps, on a choisi de ne pas utiliser la compression effectuée d'un côté du piston pour alimenter l'autre côté. L'alimentation en gaz frais est réalisée par un compresseur pour injecter le mélange explosif et exploiter les deux parties des chambres 25a/26a situées de part et d'autre des pistons 29b/29c en fonctionnement moteur.

Comme l'arbre 5a du piston double 5 du moteur à quatre temps, l'arbre 29a du rotor 29 est creux pour permettre d'y assurer la circulation d'un fluide de refroidissement en l'occurence de l'air.

On se reporte maintenant aux figures 4 et 5 du dessin qui représentent le moteur selon l'invention dans sa version à deux temps équipé des appareillages annexes d'allumage et de carburation et montrant également les moyens utilisés pour transformer la rotation alternative du piston 29 en rotation continue.

On notera que ces moyens sont indifféremment prévus pour équiper le moteur à quatre temps illustré à la figure 1 ou le moteur à deux temps de la figure 3.

Le bloc culasse 27 se prolonge par deux bras $27_1/27_2$ s'étendant dans un même plan et parallèles entre eux. Ces bras sont espacés l'un de l'autre et leur bord externe est sensiblement tangent aux carters sphériques 25/26. Ces bras portent, à leur extrémité libre, des paliers 38 dans lesquels est monté un arbre 39. Cet arbre comporte à une de ses extrémité située à l'extérieur du bras $27_2$, un volant 40 qui lui est solidaire par tous moyens appropriés, et à l'autre située à l'extérieur du bras $27_1$ une poulie à gorge trapézoïdale 41 calée sur ledit arbre. Autour de cette poulie s'enroule une courroie trapézoïdale 42 qui s'enroule également autour d'une autre poulie 43 d'un plus petit diamètre et qui est calée sur l'arbre 44a d'un compresseur d'air volumétrique 44. Ce compresseur 44 est relié par une tubulure 45 à un carburateur 46 lui-même relié par des tubulures 47/48 aux lumières d'admission 32. Ainsi et pour un moteur ayant deux chambres hémisphériques, le carburateur comporte quatre tubulures d'admission, à raison de deux tubulures 47 et de deux tubulures 48. La lubrification du moteur est obtenue par une pompe à huile 49 portée par le bras 27 et à son extrémité. Cette pompe est entraînée en rotation par un couple de pignons dentés dont un 50 est calé sur l'arbre 39 entre la poulie 41 et le bras $27_1$ et l'autre, de plus petit diamètre 51, est calé sur l'arbre de la pompe. L'huile mise en pression par la pompe doseuse 49 est injectée par un jeu de tubulures 52 dans le carburateur 46 pour être mélangée aux gaz d'admission. Le pignon 50 permet la sortie du mouvement vers une boîte de vitesse, un embrayage ou un autre dispositif. L'arbre du piston double 29a s'étend à l'extérieur de l'ensemble carters 25/26 /culasses 27/28 et comporte à l'une de ses extrémités située du côté du carburateur 46, un alumeur 53 relié par des fils aux bougies 36 et à l'autre située du côté du volant 40,un maneton 54 rendu solidaire dudit arbre par un clavetage ou tout autre moyen équivalent. Le maneton 54 est articulé à une bielle 55,elle-même articulée,sur un axe fixé perpendiculairement à la face externe du volant 40 et excentré par rapport à l'axe de ce dernier.Le battement du maneton 54,entraîné en rotation alternative dans le sens des flèches $F_1/F_2$ par le rotor 29 est transformé en rotation continue par ledit système bielle/manivelle qui entraîne en rotation continue le volant 40 et corrélativement l'arbre 39 que l'on a appelé par ailleurs arbre de prise de mouvement.

Un autre système d'embiellage, objet de la présente invention est illustré à la figure 6 du dessin.

Les composants sont semblables à ceux déjà décrits en référence des figures 4 et 5. Cet embiellage se compose ainsi d'un maneton 56 calé sur l'arbre du rotor alternatif 5/29, d'une bielle 57, articulée audit maneton et à un volant 58 calé sur l'arbre de prise de mouvement 39. Selon une particularité de cet embiellage, le maneton 56 pivote alternativement dans le sens transversal $F_3/F_4$ et symétriquement par rapport à une ligne $XX_1$ qui rejoint l'axe de rotation de l'arbre 5a/29a du piston et l'axe de rotation de l'arbre de prise de mouvement 39.

Pour éviter les points durs qui sont susceptibles de se produire lorsque le maneton 56 est en fin de course au point mort droit ou au point mort gauche, une des articulations est montée de façon élastique. Tel que cela est illustré sur le dessin, cette articulation souple est réalisée sur l'axe 58a du volant 58 auquel est articulée la bielle 57. Un roulement à aiguille 59 entoure étroitement ledit axe 58a L'élasticité de l'articulation est réalisée au moyen d'une bague en élastomère 60 qui entoure ledit roulement 59 et qui est logée dans l'oeil 57a de la bielle.

On se reporte maintenant aux figures 11 à 14 du dessin qui illustrent,de façon schématique, le fonctionnement du moteur à quatre temps.

Chacune des chambres 61/62 dans laquelle se déplace le piston 63/64 est divisée en deux parties de chambre de part et d'autre du piston. Par analogie à un moteur classique comportant quatre cylindres, ces parties de chambre sont numérotées de 1 à 4 dans le sens des aiguilles d'une montre.

L'ordre d'allumage est 1, 2, 3, 4.

A la figure 11, le piston 63 pivote dans le sens de la flèche $F_9$, le piston 64 dans le sens de la flèche $F_{10}$. Le cycle se décompose comme suit :

1 : Explosion /détente.

2 : Compression.

4 : Echappement.

3 : Admission.

A la figure 12, le piston 63 pivote dans le sens de la flèche $F_{11}$, le piston 64 dans le sens de la flèche $F_{12}$. Le cycle se décompose de la façon suivante.

1 : Echappement.

2 : Explosion/détente.

4 : Admission.

3 : Compression.

A la figure 13 le piston 63 pivote dans le sens de la flèche $F_{13}$, le piston 64 dans le sens de la flèche $F_{14}$. Le cycle est le suivant:

1 : Admission.

2 : Echappement.

4 : Compression.

3 : Explosion/détente

A la figure 14 le piston 63 pivote dans le sens de la flèche $F_{15}$, le piston 64 pivote dans le sens de la flèche $F_{16}$. Le cycle est le suivant :

1 : Compression.

2 : Admission.

4 : Explosion/détente.

3 : Echappement.

On se reporte enfin aux figures 7 à 10 du dessin qui illustrent de façon schématique le fonctionnement d'un moteur à deux temps.

Comme dans l'exemple précédent, chacune des chambres 65/66 est divisée en deux parties situées de part et d'autre du piston. Ces parties de chambres sont numérotées de 1 à 4 dans le sens des aiguilles d'une montre.

L'allumage est produit simultanément dans les chambres 1-3 ou 2-4.

A la figure 7, le piston 67 pivote dans le sens de la flèche $F_5$, le piston 68 dans le sens de la flèche $F_6$. Le cycle de fonctionnement est le suivant :

1 : Explosion/détente.

2 : Transfert des gaz : admission/échappement.

3 : Explosion/détente.

4 : Transfert des gaz : admission/échappement.

A La figure 8, le piston 67 se déplace dans le sens de la flèche $F_5$, le piston 68 dans le sens de la flèche $F_6$. Lesdits pistons masquent au passage les orifices d'échappement 69 et les lumières d'admission 70. Le cycle est le suivant :

1 : Echappement.

2 : Compression.

3 : Echappement.

4 : Compression.

A la figure 9, le piston 67 se déplace dans le sens de la flèche $F_5$, le piston 68 dans le sens de la flèche $F_6$. Dans leur rotation, les pistons ont dépassé les orifices d'échappement 69 et les lumières d'admission 70 qui sont de ce fait ouverts et débouchent dans chacune des parties des chambres 65/66. Le cycle est le suivant :

1 : Transfert des gaz : admission/échappement.

2 : Compression.

3 : Transfert des gaz : admission/échappement.

4 : Compression.

A la figure 10, le piston 67 pivote dans le sens de la flèche $F_7$, le piston 68 dans le sens de la flèche $F_8$. Le cycle de fonctionnement est le suivant :

1 : Transfert des gaz : admission/échappement.

2 : Explosion /détente

3 : Transfert des gas : admission/échappement.

4 : Explosion/détente.

I

REVENDICATIONS

1. Moteur thermique comprenant une chambre sphérique (1a/2a/ 25a/26a) dans laquelle se déplace un piston (5/29) monté à rotation alternative autour d'un axe passant par le centre de ladite chambre, laquelle est obturée par une culasse dont le moteur comporte en outre des moyens extérieurs (40/54/55/56/57/58) pour transformer la rotation alternative du piston en une rotation continue, caractérisé en ce que le piston adopte la forme générale d'une palette demi-circulaire solidaire d'un arbre de révolution (5a/29a) et s'étendant orthogonalement le long des génératrices de l'arbre, lequel piston est d'un rayon sensiblement inférieur à celui de la chambre sphérique pour se déplacer à proximité de la face interne de celle-ci, l'étanchéité entre le piston (5/29 et la chambre (1a/2a/25a/26a) étant obtenue par au moins un segment (9/31) encastré dans une rainure ($5b_2/29b_4$) réservée à la périphérie du piston, en ce que la culasse (3/4-27/28) s'étend diamétralement à la chambre et comporte sur au moins un des côtés de l'arbre (5a/29a) et à proximité de celui-ci, un bord (3c/4c/27e/28e) s'étendant parallèlement aux génératrices de l'arbre, l'étanchéité entre l'arbre et la culasse étant obtenue par au moins un segment (11/35) encastré dans une rainure ($3c_1/4c_1$-27e/28e) réservée sur la longueur dudit bord.

2. Moteur selon la revendication 1, caractérisé en ce que le segment d'étanchéité (9/31) du piston (5/29) se prolonge à ses deux extrémités (9a/9b) dans l'arbre (5a) au droit de la jonction du piston et de l'arbre pour parfaire l'étanchéité entre le piston (5/29) et la chambre (1a/2a/25a/26a).

3. Moteur selon la revendication 1, caractérisé en ce que le segment d'étanchéité (11/35) de la culasse (3/4-27/28) se prolonge à ses extrémités (11a/11b) au-delà de la face interne de la chambre sphérique (1a/2a/25a/26a) pour parfaire l'étanchéité entre la culasse (3/4-27/28) et l'arbre (5a/29a).

4. Moteur selon l'une quelconque des revendications 1 et 3, caractérisé en ce que la culasse se compose d'au moins un bloc (3/4/ 27/28) d'une section droite triangulaire isocèle dont les faces planes (3a/3b-4a/4b-27a/27b-28a/28b) sont en regard du piston en fin de course, convergent vers une ligne située du côté du centre 0 de la chambre et dans au moins une desquelles faces est réservée une cavité (3e-4d/4e-27c-28c/28d) dans laquelle sont situés les moyens d'allumage (12/36) ou d'injection du mélange air/carburant.

5. Moteur selon l'une quelconque des revendications 1, 3 et 4, caractérisé en ce que le piston (29b/29c) adopte la forme d'un onglet sphérique dont les faces planes ($29b_2/29c_2-29b_3/29c_3$) divergent à partir de l'arbre (29a), lesquelles faces comportent une cavité ($29b_5/29b_6-29c_5/29c_6$) qui se présente en fin de course du piston en regard de ladite cavité (3e-4d/4e-27c-28c/28d) de la culasse.

6. Moteur selon l'une quelconque des revendications 1, 2 et 4, caractérisé en ce que le piston (5b/5c) adopte la forme d'un segment sphérique dont les faces parallèles comportent une cavité ($5b_3/5b_4-5c_3/5c_4$) qui se présente en fin de course du piston en regard de ladite cavité (3e-4d/4e-27c-28c/28d) de la culasse.

7. Moteur selon l'une quelconque des revendications 1 à 6, caractérisé en ce qu'il comporte deux chambres (1a/1b-25a/26a) en forme d'onglet sphérique disposées en opposition et fixées à la culasse (3/4-27/28) et dans chacune des chambres se déplace un piston (5b/5c-29b/29c) lesquels pistons s'étendent à partir de l'arbre (5a/29a) dans des directions diamétralement opposées.

8. Moteur selon l'une quelconque des revendications 1, 5 et 7 fonctionnant selon un cycle à deux temps, caractérisé en ce que les lumières d'admission (32) des gaz frais et les orifices d'échappement (33) des gaz brûlés sont pratiqués dans la paroi de la chambre sphérique (25a/26a) et sont situés dans un plan diamétral passant par l'axe du piston (29).

9. Moteur selon la revendication 8, caractérisé en ce que la chambre sphérique (25a/26a) comporte deux lumières d'admission (32) symétriques par rapport à un axe perpendiculaire à l'axe du piston et passant par le centre 0 de la chambre.

10. Moteur selon l'une quelconque des revendications 8 et 9, caractérisé en ce que les lumières d'admission (32) sont d'une forme allongée et sont orientées parallèlement audit plan diamétral.

11. Moteur selon l'une quelconque des revendications 1 à 10, dont les moyens pour transformer la rotation alternative du piston en rotation continue consistent en un embiellage comportant un maneton (56) calé sur l'arbre du piston (5/29) et d'une bielle (57) articulée audit maneton (56) et à une manivelle (58) calée sur l'arbre (39) de prise de mouvement rotatif, caractérisé en ce que le maneton (56) pivote alternativement dans le sens transversal et symétriquement par rapport à une ligne ($XX_1$) qui rejoint l'axe de rotation du piston (5/29 et l'axe de rotation de l'arbre (39) de prise de mouvement et en ce qu'au moins une des articulations bielle (57) - manivelle (58) / bielle (57) - maneton (56) est montée de façon élastique.

0145626

Fig.1

Fig. 2

Fig. 3

Fig. 4

Fig. 5

0145626

Fig. 6

Fig.7

$F_5$

67 65

66

68

$F_6$

Fig.8

69 67 65

70

70

68 69 66

$F_6$

Fig.9

$F_5$

65 67

68 66

$F_6$

Fig.10

$F_7$

65 67

68 66

$F_8$

0145626

$F_9$

63    61

$F_{10}$

62    64

Fig. 11

$F_{11}$

61    63

64    62

$F_{12}$

Fig. 12

Fig. 13

$F_{13}$

63    61

62    64

$F_{14}$

Fig. 14

$F_{15}$

63    61

64    62

$F_{16}$

Office européen
des brevets

**RAPPORT DE RECHERCHE EUROPEENNE**

0145626
Numéro de la demande

EP   84 43 0044

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 577 656 (JOHNSEN) <br> * Page 1, lignes 1-104; page 2, ligne 121 - page 3, ligne 128 * | 1 | F 01 C   9/00 <br> F 02 B  53/00 |
| A | | 4-8,10 ,11 | |
| | --- | | |
| A | US-A-3 315 648 (CASTILLO) <br><br> * Colonne 1, ligne 65 - colonne 6, ligne 43 * | 1,8,9, 10 | |
| | --- | | |
| A | FR-A-2 375 439 (BERTHIER) <br> * Page 4, en entier * | 1 | |
| | ----- | | |

**DOMAINES TECHNIQUES RECHERCHES (Int. Cl.4)**

F 01 C
F 02 B

Le présent rapport de recherche a été établi pour toutes les revendications

| Lieu de la recherche <br> LA HAYE | Date d'achèvement de la recherche <br> 14-03-1985 | Examinateur <br> WASSENAAR G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82